# EUROPEAN PATENT APPLICATION

(11) **EP 4 647 612 A1**
(43) Date of publication of application: **12.11.2025**
(21) Application number: 24174895.3
(22) Date of filing: 08.05.2024
(51) Int. Cl.: F16B 2/18, F16B 21/16, B23B 31/103, B25J 15/04, F16D 1/108

(54) **A COUPLING DEVICE FOR RELEASABLY CONNECTING TWO PARTS TO EACH OTHER AND A ROBOT TOOL CHANGER COMPRISING THE COUPLING DEVICE**

(71) Applicant: Robot System Products in Scandinavia AB, 721 37 Västerås (SE)
(72) Inventor: Odell, Jonas, 74951 Grillby (SE)
(74) Representative: Swea IP Law AB

(57) **Abstract**

The present invention relates to a coupling device (1) for releasably connecting two parts to each other. The coupling device (1) comprises a first unit (3) including at least two radially movable locking members (5) and an actuating piston (7) movable in an axial direction with respect to the locking members (5) and capable of moving the locking members (5) in the radial direction between an unlocked position and a locked position. The coupling device (1) further comprises a second unit (9) provided with a plurality of notches (11) capable of receiving the locking members (5) in the locked position and thereby enabling an axial locking of the first and second units. The coupling device further comprises a positioner element (13) arranged to move the actuating piston in the axial direction between a first axial position in which the locking members (5) are in the unlocked position and a second axial position in which the locking members (5) are in the locked position. The positioner element (13) is rotatable with respect to the actuating piston (7) about a rotational axis perpendicular to said axial direction. The positioner element (13) is designed such that the actuating piston (7) is moved between the first and second axial positions upon rotation of the positioner element (13).

## Description

### Technical field

The present invention generally relates to robotics, and in particular to a coupling device for releasably connecting two parts to each other. The present invention also relates to a robot tool changer comprising the coupling device.

### Background

Robots are commonly used in the industry for performing repetitive work tasks such as material handling, cutting, welding, etc. The robot includes a robot arm having a tool attachment arranged in an outer end of the robot arm for attaching a tool to the robot arm. However, for some work tasks there is a need to change tools at the end of the robot arm. Therefore, tool changers have been developed, which enables the robot to automatically change tools. The tools are removably attached to the end of the robot arm. The tool changer may be interposed between the robot arm and each tool that may be attached to it. One part of the tool changer is fixed to the robot arm. Another part of the tool changer is connected to each tool that may be attached to the robot arm. The tool changer includes a coupling device that locks the parts together for the duration of the use of the tool on the robot arm and releases the tool from the robot arm upon completion of the tool's tasks.

EP1582314A1 discloses an example of an automatically actuated tool changer including a coupling device for releasably connecting a first part to a second part. The first part comprises substantially radially movable locking members, an actuating means capable of moving the locking members, and the second part comprises receiving means capable of receiving the locking members, whereby, during bringing the parts together and activating the actuating means, the locking members are brought in the receiving means, enabling an axial locking of the two parts, and wherein the actuating means, the locking members and the receiving means are designed and arranged such that a rotational lock is obtained. For example, the locking members are spherical. This tool changer is pneumatically actuated. The actuating means is actuated by means of compressed air. A problem with a pneumatically actuated tool changer is that it can be difficult and expensive to provide compressed air to the tool changer disposed at an end of the robot arm.

In many situations, such as where robotic tasks change only infrequently or where tools are changed only in the event of a tool failure or where there is no way to provide air or power for a tool changer operation, a manually actuated tool changer may be simpler, more reliable, and less expensive than an automated one.

WO2010028113 discloses an example of a manually actuated robotic tool changer includes a first housing having a generally cylindrical piston with a central axis partially extending from the first housing, the piston being rotatable about the central axis. A plurality of tabs is disposed about the circumference of a portion of the piston extending from the first housing. A second housing has a bore to receive a portion of the piston. A plurality of locking lugs is disposed about the bore. The tool changer is manually actuated from an unlocked position wherein the piston assumes a position with respect to the first housing such that the extending portion of the piston may be moved within the bore with the tabs moving between the locking lugs, to a locked position wherein the piston is rotated with respect to the first housing such that the tabs move beneath the locking lugs to lock the first and second housings together. This solution cannot be used for locking and unlocking of the coupling device disclosed in EP1582314A1.

### Summary

It is an aim of the present invention to provide an improved device suitable for locking and unlocking of a coupling device of the type disclosed in EP1582314A1.

This aim is achieved by a coupling device for releasably connecting two parts to each other as defined in claim 1.

The coupling device comprises a first unit including at least two radially movable locking members and an actuating piston movable in an axial direction with respect to the locking members and capable of moving the locking members in the radial direction between an unlocked position and a locked position. The coupling device also comprises a second unit provided with a plurality of notches capable of receiving the locking members in the locked position and thereby enabling an axial locking of the first and second units.

The coupling device further comprises a positioner element arranged to move the actuating piston in the axial direction between a first axial position in which the locking members are in the unlocked position and a second axial position in which the locking members are in the locked position. The positioner element is rotatable with respect to the actuating piston about a rotational axis perpendicular to the axial direction, and the positioner element is designed such that the actuating piston is moved between the first and second axial positions upon rotation of the positioner element.

The actuating piston is linearly movable in an axial direction and the locking members are linearly movable in a radial direction with respect to the axial direction. The actuating piston moves the locking members in a radial direction between an unlocked position and a locked position when the actuating piston is moved in the axial direction between a first axial position and a second axial position. The actuating piston is moved in the axial direction between the first axial position and the second axial position upon rotation of the positioner element about a rotational axis perpendicular to the axial direction. Thus, the locking members are moved between the unlocked position and the locked position upon rotation of the positioner element. The coupling device can be lock or unlock by rotating the positioner element, for example 180°, in two opposite directions. Thus, the first and second units are attached to each other upon rotation of the positioner element in one direction, and the first and second units are released from each other upon rotation of the positioner element in the opposite direction.

This coupling device makes it easy to change tool. It is not necessary to use compressed air.

For example, the positioner element can be provided with a handle to facilitate the rotation of the positioner element and enable manual actuation of the coupling device. Such a coupling device is cost efficient as no compressed air or electrical power is needed for the operation of connecting the two parts together.

Alternatively, the rotation of the positioner element can be actuated by means of an electric motor. Thus, it is no longer necessary to provide compressed air to the coupling device.

Such a coupling device enables the use of two or more radially movable locking members. This is advantageous as it provides a flexible solution. Preferably, the coupling device comprises more than three locking members. E.g. four or six locking members may be used. The more locking members that are used, the more load can be handled by the locking device.

According to an embodiment of the invention, the actuating piston comprises a tapering part having a first portion adapted to be in physical contact with the locking members in the locked position and a second portion adapted to be in physical contact with the locking members in the unlocked position, wherein the diameter of the first portion is larger than the diameter of the second portion. The first portion of the tapering part is in physical contact with the locking members when the locking members are in the locked position and the actuating piston is in the second axial position. The second portion of the tapering part is in physical contact with the locking members when the locking members are in the unlocked position and the actuating piston is in the first axial position. Due to the fact that the actuating piston comprise a tapering part having a first and a second portion, and the diameter of the first portion is larger than the diameter of the second portion, the actuating piston pushes the locking members outward in a radial direction when the actuating piston is axially moved from the first axial position to the second axial position, and the locking members are allowed to slide inwards in a radial direction when the actuating piston is axially moved from the second axial position to the first axial position.

According to an embodiment of the invention, the positioner element is elongated and has a longitudinal axis which defines the rotational axis, and the positioner element is rotatable about the longitudinal axis.

According to an embodiment of the invention, the actuating piston is provided with openings for receiving the intermediate portion, the periphery of intermediate portion is directly or indirectly in physical contact with the actuating piston when the positioner element extends through the openings in the actuating piston and the positioner element is rotated.

According to an embodiment of the invention, the positioner element comprises an intermediate portion having a periphery directly or indirectly in physical contact with the actuating piston when the positioner element is rotated, and the periphery of the intermediate portion is varying in size such that the actuating piston is moved between the first and second axial positions upon rotation of the positioner element. The intermediate portion is not rotational symmetric. Due to the fact that the periphery is varying in size, the distance between the periphery of the intermediate portion and the rotational axis varies during rotation of the positioner element. Since the actuating piston is in contact with the periphery of the intermediate portion during rotation of the positioner element, the actuating piston is moved up and down in a direction perpendicular to the rotational axis of the positioner element when the intermediate portion is rotated about the rotational axis. The periphery of the intermediate portion can be directly in physical contact with the actuating piston, or indirectly in physical contact with the actuating piston via another part arranged between the actuating piston and the positioner element.

According to an embodiment of the invention, each of the openings in the actuating piston comprises a contact portion arranged such that the contact portion abuts the periphery of the intermediate portion during the rotation of the positioner element.

According to an embodiment of the invention, the positioner element comprises an intermediate portion provided with a recess having a bottom surface. Due to the recess, the intermediate portion is not rotational symmetric, and the periphery of the intermediate portion varies in different radial direction.

According to an embodiment of the invention, the bottom surface of the recess extends along a part of the rotational axis. Thus, the periphery of the intermediate portion varies from 0 at the recess to the radius r of the curves surface.

According to an embodiment of the invention, the intermediate portion is partly cylindrical and comprises a curved surface, wherein the curved surface and the bottom surface of the recess are arranged on opposite sides of the intermediate portion such that the curved surface and the bottom surface of the recess are alternately in (direct or indirect) contact with the actuating piston upon rotation of the positioner element. The bottom surface of the recess is in (direct or indirect) contact with the actuating piston when the actuating piston is in the first axial position and the coupling unit is unlocked, and the curved surface of the intermediate portion is in (direct or indirect) contact with the actuating piston when the actuating piston is in the second axial position and the coupling unit is locked. Thus, the curved surface forces the actuating piston to move to the second axial position in which the locking members are in the locked position, and the bottom surface of the recess allows the actuating piston to move back to the first axial position in which the locking members are in the unlocked position.

According to an embodiment of the invention, the bottom surface of the recess has chamfered edges. The chamfered edges facilitate the transition between the bottom surface and the curved surface.

According to an embodiment of the invention, at least a part of the bottom surface of the recess is flat. Thus, the actuating piston may rest on the flat surface of intermediate portion when the locking members are in the opened position.

According to an embodiment of the invention, each of the openings in the actuating piston comprises contact portion arranged such that the contact portion abuts the bottom surface of the recess when the actuating piston is in the first axial position, and the contact portion abuts the curved surface of the intermediate portion when the actuating piston is in the second axial position.

According to an embodiment of the invention, the contact portion is flat.

According to an embodiment of the invention, the coupling device comprises a first spring member arranged to act on the positioner element so that the actuating piston is forced towards the locking elements in the axial direction. The first spring member keeps the positioner element in physical contact with the actuating piston during the rotation of the positioner element.

According to an embodiment of the invention, the coupling device comprises a second spring member arranged between the actuating piston and the positioner element to act on the positioner element to force the positioner element in a direction away from the actuating piston. The second spring member ensures that the actuating piston is moved back to the first axial position when the positioner element is rotated such that the contact portion abuts the bottom surface of the recess.

According to an embodiment of the invention, the positioner element is provided with a handle arranged to rotate the positioner element in two opposite directions about the rotational axis. Thus, it becomes easy to lock and unlock the coupling device by rotating the handle, for example 180°, in two opposite directions. Thus, the first and second units are attached to each other upon rotation of the handle in one direction and the first and second units are released from each other upon rotation of the handle in the opposite direction.

According to another aspect of the invention, the above aim is achieved by a robot tool changer comprising the coupling device for releasably connecting a robot and a tool to each other.

### Brief description of the drawings

The invention will now be explained more closely by the description of different embodiments of the invention and with reference to the appended figures.
Fig. 1 shows schematically an example of a coupling device in a locked position.
Fig. 2 shows the coupling device in figure 1 in an unlocked position.
Fig. 3 shows the coupling device in figure 1 in a cross-sectional view A-A.
Fig. 4 shows the coupling device in figure 2 in a cross-sectional view B-B.
Fig. 5a shows a perspective view of an example of an actuating piston.
Fig. 5b shows the actuating piston in figure 5a from a frontal view.
Fig. 5c shows the actuating piston in figure 5b in a cross-sectional view A-A.
Fig. 6a shows an example of a positioner element in a side view.
Fig. 6b shows a perspective view of the positioner element in figure 6a.
Fig. 6c shows the positioner element in figure 6a in a cross-sectional view C-C.
Fig. 7a shows a perspective view of the actuating piston and the positioner element when being in a locked position.
Fig. 7b shows the actuating piston and the positioner element in figure 7a in a view from above.
Fig. 7c shows the actuating piston and the positioner element in figure 7b in a cross-sectional view E-E.
Fig. 8a shows a perspective view of the actuating piston and the positioner element when being in an unlocked position.
Fig. 8b shows the actuating piston and the positioner element in figure 8a in a view from above.
Fig. 8c shows the actuating piston and the positioner element in figure 8b in a cross-sectional view G-G.

### Detailed description

Aspects of the present disclosure will be described more fully hereinafter with reference to the accompanying drawings. The coupling device can, however, be realized in many different forms and should not be construed as being limited to the aspects set forth herein. Like numbers in the drawings refer to like elements throughout.

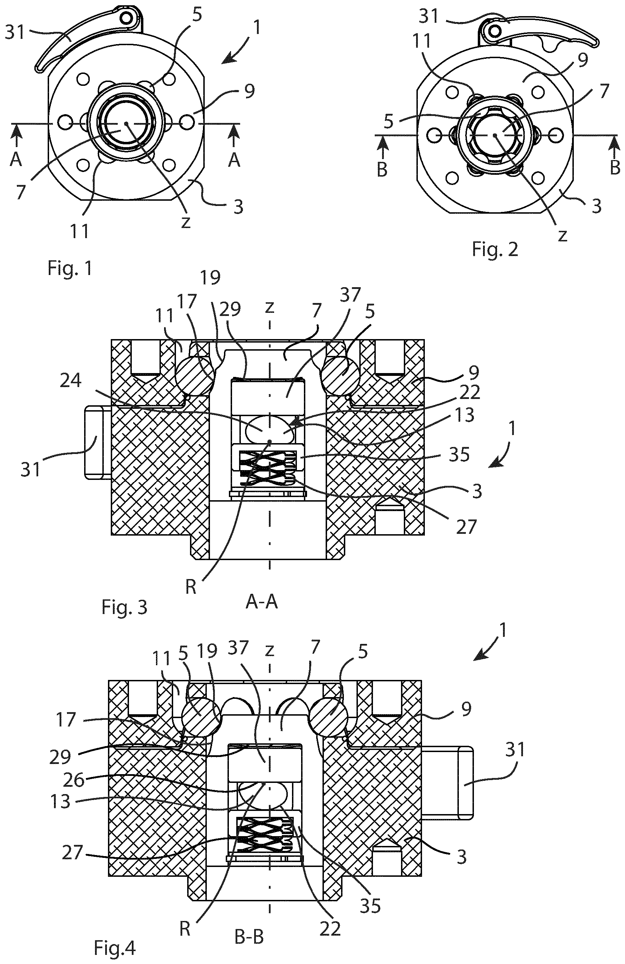

Figures 1 - 4 show an example of a coupling device 1 for releasably connecting two parts to each other. One of the two parts may be located on a robot and the other part may be located on a robot tool. Figures 1 and 3 show the coupling device 1 in a locked position, also called a closed position, and figures 2 and 4 show the coupling device 1 in an unlocked position, also called an open position. Figures 1 and 2 show the coupling device 1 in a view from above. Figure 3 shows a cross-sectional view A-A through the coupling device 1 in the locked position, and figure 4 shows a cross-sectional view B-B through the coupling device 1 in the unlocked position.

The coupling device 1 comprises a first unit 3 and a second unit 9 releasably connectable to each other. The first unit 3 comprises at least two radially movable locking members 5. In this example the coupling device 1 comprises six locking members 5, however, it is possible to use any number of locking members 5 as long as there is more than one locking member 5. Preferably, six locking members 5 may be used, as in the example illustrated in figures 1 and 2. The locking members 5 may be steel balls or balls made of other suitable materials. The first unit 3 further comprises an actuating piston 7 movable in an axial direction Z with respect to the locking members 5 and capable of moving the locking members 5 in the radial direction between the unlocked position and the locked position.

The second unit 9 is provided with a plurality of notches 11 capable of receiving the locking members 5 in the locked position and thereby enabling an axial locking of the first unit 3 and second unit 9. The number of notches corresponds to the number of the locking members 5. The second unit 9 comprises at least two notches 11. Preferably six notches 11 may be used as in the example illustrated in figure 1. The locking members 5 protrude into the notches 11 when the locking members 5 are in the locked position, as shown in figures 1 and 3. The locking members 5 have been moved away from the notches 11 when the locking members 5 are in the unlocked position, as shown in figures 2 and 4. The first unit 3 and a second unit 9 are fixedly attached to each other when the locking members 5 are in the locked position. The first unit 3 and the second unit 9 are released from each other when the locking members 5 are in the unlocked position.

The coupling device 1 further comprises a positioner element 13 arranged to move the actuating piston 7 in the axial direction Z between a first axial position in which the locking members 5 are in the unlocked position, as shown in figure 4, and a second axial position in which the locking members 5 are in the locked position, as shown in figure 3. The positioner element 13 is rotatable with respect to the actuating piston 7 about a rotational axis R perpendicular to the axial direction Z. The positioner element 7 is designed such that the actuating piston 7 is moved between the first and second axial positions upon rotation of the positioner element 13 about the rotational axis R. The coupling device 1 may comprise the handle 31 which may be used to manually rotate the positioner element 13 such that the actuating piston 7 is moved in the axial direction Z between the first and second axial positions.

The coupling device 1 may further comprise a first spring member 27 arranged to act on the positioner element 13 so that the actuating piston 7 is forced towards the locking members 5 in the axial direction Z. The first spring member 27 is, for example, disposed between the positioner element 13 and a bottom part of the actuating piston 7. The first spring is, for example, a wave spring, as shown in figures 3 and 4. However, it is possible to use other types of springs such as a coil spring.

The coupling device 1 may further comprise a second spring member 29 arranged between the actuating piston 7 and the positioner element 13 to act on the positioner element 13 to force the positioner element 13 in a direction away from the actuating piston 7. The second spring member 29 is, for example, disposed between a top part of the actuating piston 7 and a lock piston 37. The second spring member 29 prevents backlash in the coupling device 1, e.g. between the actuating piston 7 and the positioner element 13. The second spring member 29 is, for example, a plate spring. However, it is possible to use other types of springs.

The coupling device 1 may further comprise a first distance element 35. The first distance element 35 may be arranged between the first spring member 27 and the positioner element 13. The first distance element 35 may act with the positioner element 13 to position the actuating piston 7 in the unlocked position. The coupling device 1 may further comprise a second distance element 37. The lock piston 37 may be arranged between the positioner element 13 and the second spring member 29. The lock piston 37 may act together with the positioner element 13 to position the actuating piston 7 in the locked position.

The coupling device 1 may further comprise a handle 31 arranged so that the locking members 5 are moved between the unlocked position and locked position when the handle is rotated. Figure 1 illustrates the handle 31 when the in the locking members 5 are in the locked position, and figure 2 illustrates the handle 31 when the locking members 5 are in the unlocked position.

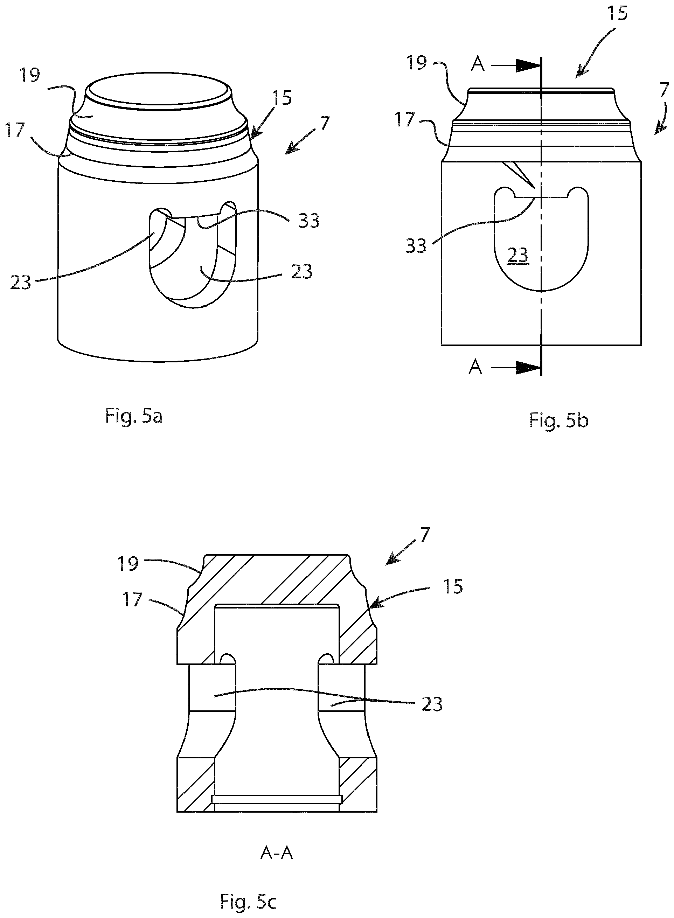

Figures 5 a-c show an example of an actuating piston 7. Figure 5a shows a perspective view of the actuating piston 7. Figure 5b shows the actuating piston 5 in a side view. Figure 5c shows the actuating piston 5 in a cross-sectional view A-A. Suitably, the actuating piston 7 is rotational symmetric. Preferably, the actuating piston 7 is cylindrical. The actuating piston 7 may comprise a tapering part 15 designed so that it is at least partly tapering towards an upper end of the actuating piston 7. The tapering part 15 comprises a first portion 17 adapted to be in physical contact with the locking members 5 in the locked position and a second portion 19 adapted to be in physical contact with the locking members 5 in the unlocked position. The diameter of the first portion 17 is larger than the diameter of the second portion 19, as shown in figure 5c. The tapering portion 15 is arranged in an upper end of the the actuating piston 5.

The first portion 17 of the tapering part is in physical contact with the locking members 5 when the locking members are in the locked position and the actuating piston is in the second axial position, as shown in figure 3. The second portion 19 of the tapering part is in physical contact with the locking members 5 when the locking members are in the unlocked position and the actuating piston is in the first axial position, as shown in figure 4. Due to the fact that the actuating piston 7 comprise a tapering part 15 having a first portion 17 with a diameter larger than the diameter of the second portion 19, the actuating piston pushes the locking members 5 outward in a radial direction when the actuating piston is axially moved from the first axial position to the second axial position, as shown in figure 3. Further, the locking members 5 are allowed to slide inwards in a radial direction when the actuating piston 7 is axially moved from the second axial position to the first axial position, as shown in figure 4.

The first portion 17 and the second portion 19 of the tapering part 15 may be arranged to be flat or curved as in the illustrated example. However, it is preferable that the first portion 17 and the second portion 19 are curved as it provides a better and more secure support when the first portion 17 and the second portion 19 are in contact with the locking members 5.

The actuating piston 7 can be hollow. The actuating piston 7 comprises walls which can define a space for housing a part of the actuating piston 7. Further, the space inside the actuating piston 7 may house the first and second spring members 27, 29, and the first and second distance elements 35, 37. The walls of the actuating piston 7 may be provided with openings 23 for receiving the positioner element 13. The openings 23 in the actuating piston 7 may comprise a contact portion 33 designed to be in contact with the positioner element 13 during rotation of the positioner element 13.

The actuating piston 7 is, for example, made of steel or another material with suitable strength, such as reinforced plastic.

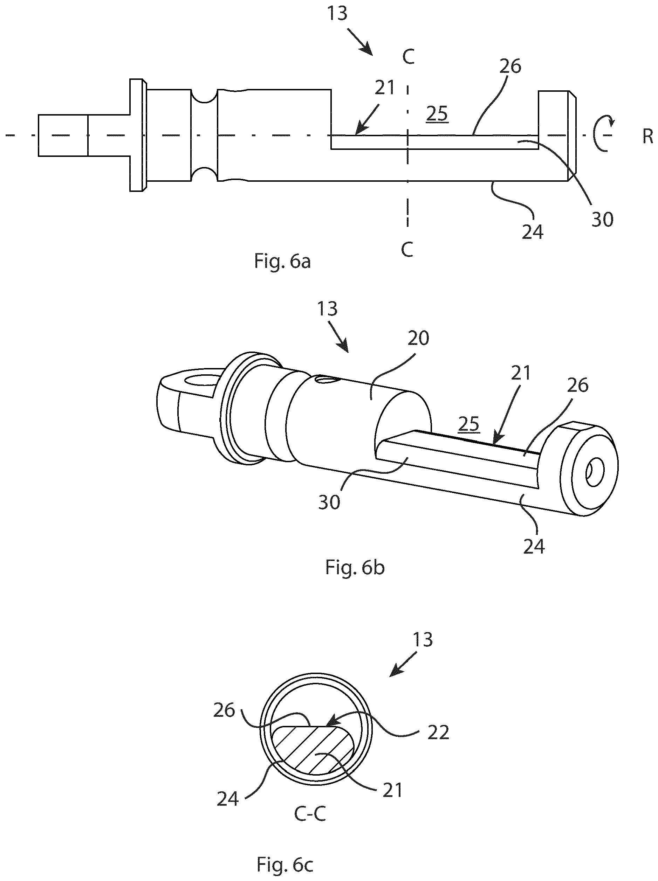

Figures 6a-c show an example of a positioner element 13. Figure 6a shows the positioner element 13 in a side view. Figure 6b shows the positioner element 13 in a perspective view. Figure 6c shows the positioner element 13 in a cross-sectional view C-C.

The positioner element 13 is elongated and is rotatable about its longitudinal axis. Thus, the rotational axis R coincide with the longitudinal axis of the positioner element 13. The positioner element 13 comprises an intermediate portion 21 having a periphery 22 that vary in size. The periphery 22 is directly or indirectly in physical contact with the actuating piston 7 when the positioner element 13 is rotated, as shown in figures 3 and 4. The periphery 22 of the intermediate portion 21 is varying in size such that the actuating piston 7 is moved between the first and second axial positions upon rotation of the positioner element 13.

In the illustrated example, the positioner element 13 comprises a partly cylindrical part 20. The cylindrical part 20 comprises an intermediate portion 21 provided with a recess 25 having a bottom surface 26. The periphery 22 of the intermediate portion 21 is directly or indirectly in physical contact with the actuating piston 7 when the positioner element 13 is rotated, as shown in figures 3 and 4. Due to the recess 25, the intermediate portion 21 is not rotational symmetric, and the periphery 22 of the intermediate portion varies in different radial direction, as shown in figure 6c. The periphery 22 of the intermediate portion 21 is varying in size such that the actuating piston 7 is moved between the first and second axial positions upon rotation of the positioner element 13.

For example, the actuating piston 7 may be provided with openings 23 for receiving the intermediate portion 21, and the periphery 22 of the intermediate portion 21 may be indirectly or directly in physical contact with the actuating piston 7 when the positioner element 13 extends through said openings 23 in the actuating piston 7. For example, the periphery 22 of the of the intermediate portion 21 is in physical contact with the contact portion 33 of the actuating piston 7, shown in figure 5b.

Preferably, the bottom surface 26 of the recess 25 extend along a part of the rotational axis R. The intermediate portion 21 may be partly cylindrical and may comprise a curved surface 24. The curved surface 24 can be a part of the envelope surface of the cylindrical part 20. The curved surface 24 and the bottom surface 26 of the recess 25 may be arranged on opposite sides of the intermediate portion 21 such that the curved surface 24 and the bottom surface 26 of the recess 25 are alternately in contact with the actuating piston 7 upon rotation of the positioner element 1, as shown in figures 3 and 4. The bottom surface 26 of the recess 25 may be in contact with the actuating piston 7 when the actuating piston 7 is in the first axial position, and the curved surface 24 of the intermediate portion 21 may be in contact with the actuating piston 7 when the actuating piston 7 is in the second axial position. At least a part of the bottom surface 26 of the recess 25 may be flat. The bottom surface 26 of the recess 25 may have chamfered edges 30 to facilitate the transition of the contact between the flat bottom surface 26 and the curved surface.

The the positioner element 13 is, for example, made of steel or another material with suitable strength, such as reinforced plastic.

Alternatively, the coupling device 1 may comprise a roll member, e.g. a ball bearing or a bearing, and the intermediate portion 21 may be in contact with the roll member when the positioner element 13 extends through said openings 23 in the actuating piston 7. Thus, the intermediate portion 21 is thereby indirectly in contact with the actuating piston 7. Using the roll member is advantageous as it reduces friction and wear on the actuating piston 7.

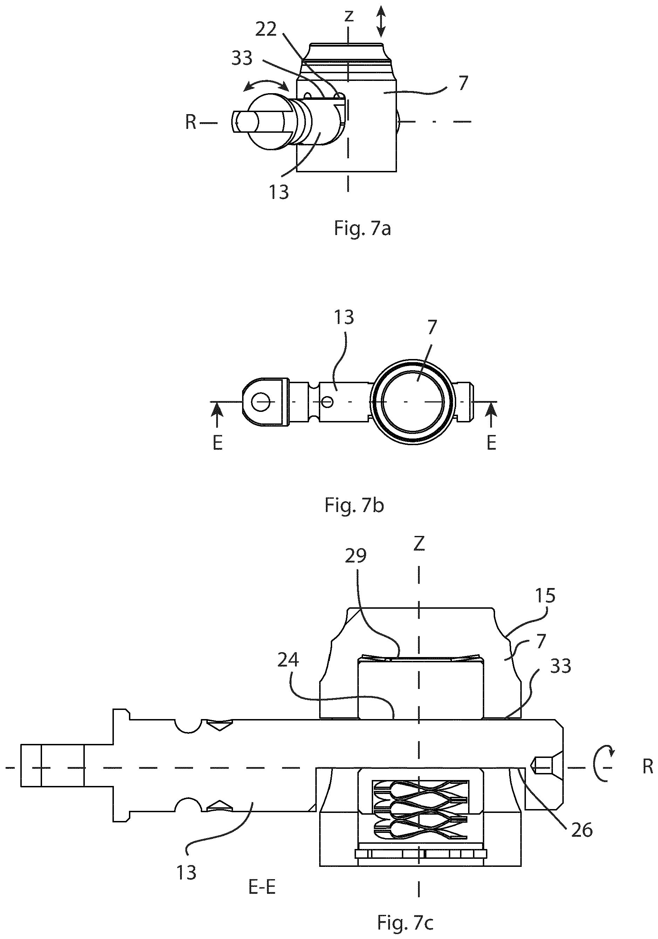

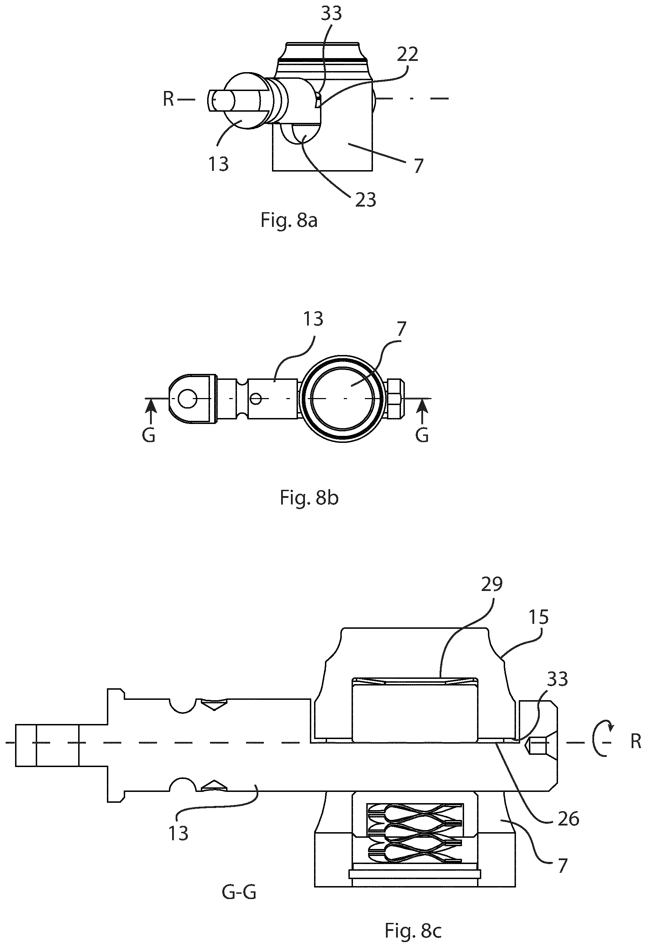

The actuating piston 7 and the positioner element 13 cooperate during the attaching of the first and second units 3, 9 to each other and the releasing the first and second units from each other. An example of this cooperation will be explained in the following with reference to the figures 7a-c and 8a-c.

Figures 7a-c show the actuating piston 7 and the positioner element 13 when being in a locked position and figures 8a-c show the actuating piston 7 and the positioner element 13 when being in an unlocked position. Figure 7a shows a perspective view of the actuating piston and the positioner element in the locked position and figure 8a shows a perspective view of the actuating piston and the positioner element in the unlocked position. Figure 7b shows the actuating piston and the positioner element in a view from above in the locked position. Figure 8b shows the actuating piston 7 and the positioner element 13 in a view from above in the unlocked position. Figure 7c shows the actuating piston and the positioner element in a cross-sectional view E-E in the locked position. Figure 8c shows the actuating piston and the positioner element in a cross-sectional view G-G in the unlocked position.

The actuating piston 7 is linearly movable in the axial direction Z, and the positioner element 13 is rotatable about a rotational axis R perpendicular to the axial direction Z, as seen in figure 7a and 7c. The coupling device 1 is locked upon rotation of the positioner element 13 in one direction, and the coupling device 1 is unlocked upon rotation of the positioner element 13 in the opposite direction. The actuating piston 7 is moved up and down in the axial direction Z between the first and second axial positions upon rotation of the positioner element 13. Thus, the locking members 5 are moved between the unlocked position and the locked position upon rotation of the positioner element.

In the illustrated example, the positioner element 13 extends through the openings 23 of the actuating piston 7 such that the intermediate portion 21 extends through the actuating piston 7 and the intermediate portion 21 is disposed between the openings 23. In this example, each of the openings 23 in the actuating piston comprises a contact portion 33 arranged such that the contact portion 33 abuts the periphery 22 of the intermediate portion 21 during the rotation of the positioner element 13. In this example, the contact portion 33 abuts the bottom surface 26 of the recess 25 in the locked position, as shown in figure 8c, and the contact portion 33 abuts the curved surface 24 of the intermediate portion 21 in the unlocked position, as shown in figure 7c. The curved surface 24 and the bottom surface 26 of the recess are alternately in contact with the contact portion 33 of actuating piston upon rotation of the positioner element 13.

Due to the fact that periphery 22 of the intermediate portion 21 is varying in size, the distance between the contact portion 33 and the rotational axis R varies during rotation of the positioner element 13, as seen in figures 7a and 8a, and consequently the actuating piston 7 is moved up and down in the axial direction z upon rotation of the positioner element 13.

The distance between the contact portion 33 and the rotational axis R is larger in the locked position than in the unlocked position, as seen in figures 7c and 8c. Since contact portion 33 of the actuating piston is in contact with the periphery 22 of the intermediate part 21 during rotation of the positioner element, the tapering part 15 of the actuating piston 7 is moved up and down in a direction perpendicular to the rotational axis of the positioner element when the positioner element 13 is rotated about the rotational axis. The tapering part 15 is in physical contact with the locking members 5. Thus, the tapering part 15 of actuating piston pushes the locking members 5 outward in a radial direction when the actuating piston is moved upwards in the axial direction Z so that the locking members 5 are moved into the notches 11, as shown in figure 3, and accordingly the coupling device is 1 is locked. The locking members 5 are allowed to slide inwards in the radial direction when the tapering part of the actuating piston 7 is moved downwards in the axial direction Z so that the locking members 5 are moved away from the notches 11, as shown in figure 4, and accordingly the coupling device is 1 is unlocked.

The actuating piston 7 is arranged movable in the axial direction with respect to the first and second units 3, 9. The positioner element 13 is arranged rotatable with respect to the first and second units 3, 9. Preferably, the positioner element 13 is arranged fixed in the axial direction Z with respect to the first and second units 3, 9. Thus, the rotational axis R has a fixed position in the axial direction Z with respect to the first and second units 3, 9. For example, the first unit 3 is designed so that the positioner element 13 is fixed in the axial direction Z but is allowed to rotate relative to the first unit 3. For example, the first unit 3 can surround the actuating piston 7 and first unit 3 is provided with at least one opening for receiving the positioner element 13, and the opening has a diameter that substantially corresponds to the diameter of the cylindrical part 20.

The coupling device 1 is locked or unlocked by rotating the positioner element 13, for example 180°, in two opposite directions. Thus, the first and second units 3, 9 are attached to each other upon rotation of the positioner element 13 in one direction, and the first and second units 3, 9 are released from each other upon rotation of the positioner element 13 in the opposite direction. The positioner element 13 may be provided with the handle 31 to facilitate the rotation of the positioner element 13 and enable manual actuation of the coupling device 1. This enables a coupling device 1 that is cost efficient as no compressed air or electrical power is needed for the operation of connecting the two parts together. Alternatively, the rotation of the positioner element 13 may be actuated by means of an electric motor.

The terminology used herein is for the purpose of describing particular aspects of the disclosure only and is not intended to limit the invention. As used herein, the singular forms "a", "an" and "the" are intended to include the plural forms as well, unless the context clearly indicates otherwise.

Unless otherwise defined, all terms used herein have the same meaning as commonly understood by one of ordinary skill in the art to which this disclosure belongs.

### Reference list

1. Coupling device
3. First unit
5. Locking members
7. Actuating piston
9. Second unit
11. Notches
13. Positioner element
15. Tapering part
17. First portion
19. Second portion
20. Cylindrical part
21. Intermediate portion
22. Periphery of intermediate portion
23. Openings
24. Curved surface of intermediate portion
25. Recess
26. Bottom surface of recess
27. First spring member
29. Second spring member
30. Chamfered edges
31. Handle
33. Contact portion
35. First distance element
37. Second distance element
Z. Axial direction
R. Rotational axis

## Claims

1. Coupling device (1) for releasably connecting two parts to each other, wherein the coupling device comprises:
- a first unit (3) including at least two radially movable locking members (5) and an actuating piston (7) movable in an axial direction (Z) with respect to the locking members (5) and capable of moving the locking members (5) in a radial direction between an unlocked position and a locked position, and
- a second unit (9) provided with a plurality of notches (11) capable of receiving the locking members (5) in the locked position and thereby enabling an axial locking of the first unit (3) and the second unit (9), **characterized in that** the coupling device (1) comprises a positioner element (13) arranged to move the actuating piston (7) in the axial direction (Z) between a first axial position in which the locking members (5) are in the unlocked position and a second axial position in which the locking members (5) are in the locked position, wherein the positioner element (13) is rotatable with respect to the actuating piston (7) about a rotational axis (R) perpendicular to said axial direction (Z), and the positioner element (13) is designed such that the actuating piston (7) is moved between the first and second axial positions upon rotation of the positioner element (13).

2. The coupling device (1) according to claim 1, wherein the actuating piston (7) comprises a tapering part (15) having a first portion (17) adapted to be in physical contact with the locking members (5) in the locked position and a second portion (19) adapted to be in physical contact with the locking members (5) in the unlocked position, wherein the diameter of the first portion (17) is larger than the diameter of the second portion (19).

3. The coupling device (1) according to claim 1 or 2, wherein the positioner element (13) comprises an intermediate portion (21) having a periphery (22) directly or indirectly in physical contact with the actuating piston (7) when the positioner element (13) is rotated, and the periphery (22) of the intermediate portion (21) is varying in size such that the actuating piston (7) is moved between the first and second axial positions upon rotation of the positioner element (13).

4. The coupling device (1) according to claim 3, wherein the intermediate portion (21) is provided with a recess (25) having a bottom surface (26), the actuating piston (7) is provided with openings (23) for receiving the intermediate portion (21), and the periphery (22) of the intermediate portion (21) is indirectly or directly in physical contact with the actuating piston (7) when the positioner element (13) extends through said openings (23) in the actuating piston (7) and the positioner element (13) is rotated.

5. The coupling device (1) according to claim 4, wherein the bottom surface (26) of the recess (25) extends along a part of the rotational axis (R).

6. The coupling device (1) according to claim 4 or 5, wherein the intermediate portion (21) is partly cylindrical and comprises a curved surface (24), the curved surface (24) and the bottom surface (26) of the recess (25) are arranged on opposite sides of the intermediate portion (21) such that the curved surface (24) and the bottom surface (26) of the recess (25) are alternately in contact with the actuating piston (7) upon rotation of the positioner element (13).

7. The coupling device (1) according to claim 6, wherein the bottom surface (26) of the recess (25) is in contact with the actuating piston (7) when the actuating piston (7) is in the first axial position, and the curved surface (24) of the intermediate portion (21) is in contact with the actuating piston (7) when the actuating piston (7) is in the second axial position.

8. The coupling device (1) according to any of the claims 4 - 7, wherein at least a part of the bottom surface (26) of the recess (25) is flat.

9. The coupling device (1) according to according to any of the claims 4 - 8, wherein the bottom surface (26) of the recess (25) has chamfered edges (30).

10. The coupling device (1) according to any of the claims 4 - 9, wherein each of said openings (23) in the actuating piston (7) comprises a contact portion (33) arranged such that the contact portion (33) abuts the bottom surface (26) of the recess (25) when the actuating piston (7) is in the first axial position, and the contact portion (33) abuts the curved surface of the intermediate portion (21) when the actuating piston (7) is in the second axial position.

11. The coupling device (1) according to any of the previous claims, wherein the coupling device (1) comprises a first spring member (27) arranged to act on the positioner element (13) so that the actuating piston (7) is forced towards the locking members (5) in the axial direction (Z).

12. The coupling device (1) according to any of the previous claims, wherein the coupling device (1) comprises a second spring member (29) arranged between the actuating piston (7) and the positioner element (13) to act on the positioner element (13) to force the positioner element (13) in a direction away from the actuating piston (7).

13. The coupling device (1) according to any of the previous claims, wherein the positioner element (13) is provided with a handle (31) arranged to rotate the positioner element (13) in two opposite directions about the rotational axis (R).

14. A robot tool changer comprising the coupling device (1) according to claim 1 for releasably connecting a robot and a tool to each other.
